# EUROPÄISCHE PATENTSCHRIFT

(11) **EP 3 834 241 B1**
(45) Veröffentlichungstag und Bekanntmachung des Hinweises auf die Patenterteilung: **25.02.2026**
(21) Anmeldenummer: 19756124.4
(22) Anmeldetag: 05.08.2019
(51) Int. Cl.: H01M 50/308, H01M 50/392, H01M 10/06, H01M 10/52

(54) **PROZESSMEDIUMLEITVORRICHTUNG FÜR EIN REKOMBINATIONSSYSTEM**
PROCESS MEDIUM GUIDING APPARATUS FOR A RECOMBINATION SYSTEM
DISPOSITIF DE GUIDAGE DE FLUIDE DE PROCESSUS POUR UN SYSTÈME DE RECOMBINAISON

(30) Priorität: 08.08.2018 DE 102018119303
(43) Veröffentlichungstag der Anmeldung: 16.06.2021
(73) Patentinhaber: BAE BATTERIEN GMBH, 12459 Berlin (DE)
(72) Erfinder: SCHIEMANN, Michael, 14612 Falkensee (DE); ROSS, Julia-Beatrix, 31848 Bad Münder am Deister (DE)
(74) Vertreter: Gulde & Partner
(86) Internationale Anmeldenummer: PCT/EP2019/071017
(87) Internationale Veröffentlichungsnummer: WO 2020/030586

(56) Entgegenhaltungen:
- WO-A1-2017/191848
- DE-U1- 202018 100 892

## Beschreibung

Die Erfindung betrifft eine Prozessmediumleitvorrichtung für ein Rekombinationssystem mit einer Rekombinationseinrichtung zur katalytischen Rekombination von in Akkumulatoren entstehendem Wasserstoff und Sauerstoff zu Wasser.

Akkumulatoren sind weitverbreitet im Einsatz und dienen als wiederaufladbarer Speicher für elektrische Energie auf elektrochemischer Basis. Das Anwendungsspektrum der Blei-Säure-Technologie ist sehr breit, angefangen von der einfachen Starterbatterie als Bordnetz- und Anlasserbatterie wird diese Technologie auch in unterbrechungsfreien Stromversorgungen (USV) im Bereitschaftsparallelbetrieb zur Netzausfallversorgung, in Photovoltaikanlagen und in Traktionssystemen für Flurförderfahrzeuge im zyklischen Betrieb eingesetzt.

Ein Merkmal geschlossener Blei-Säure-Akkumulatoren ist der Wasserverlust. Aufgrund der elektrochemischen Eigenschaften zerfällt das Wasser im Elektrolyt des Akkumulators zu Sauerstoff und Wasserstoff, sodass der Elektrolyt-Stand in den einzelnen geschlossenen Zellen absinkt und eine Batterieraumbelüftung zwingend vorgeschrieben ist. Der Wasserzerfall tritt zum einen durch die geringe Zersetzungsspannung von Wasser (1,223 V Wasserzerfallsspannung) auf, zum anderen führt die Elektrolyse im Blei-Säure-Akkumulator bei Überschreitung der Gasungsspannung von 2,40 V pro Zelle zu Wasserzersetzung verbunden mit dem Aufsteigen der Gasblasen.

Dabei entsteht an der negativen Elektrode Wasserstoff, welches ein brennbares aber die Verbrennung nicht unterstützendes Gas ist. An der positiven Elektrode wiederum bildet sich im stöchiometrischen Verhältnis 1:2 Sauerstoff. Diese Gasblasen entweichen dem System, aufgrund der geringen Löslichkeit beider Gase im Elektrolyt, über den Einfüll- und Entgasungsstopfen.

Sowohl innerhalb als auch außerhalb des Batteriekörpers können die beiden Gase wieder miteinander rekombinieren. Bereits bei Raumtemperatur erfolgt die Verbindung von Sauerstoff und Wasserstoff zu Wasser. Dies geschieht jedoch in einer so geringen kaum messbaren Geschwindigkeit, dass ein Wasserstoff- Sauerstoff-Gemisch monatelang aufbewahrt werden kann, ohne eine Umsetzung messen zu können.

Insgesamt wurden die Nachteile der Wasserzersetzung und damit verbundener Wartungsaufwand des Blei-Säure-Akkumulators aber auch von anderen Batterietechnologien wie Nickel-Eisen oder Nickel-Cadmium (also bei vielen Batterietechnologien basierend auf einem wässrigen Elektrolyt) schon sehr früh erkannt (beispielsweise 1904 von Herrn Edison) und über verschiedene Entwicklungsstadien wurde versucht, diese Nachteile auszugleichen.

So wurde festgestellt, dass die Beschleunigung des Rekombinationsvorganges von Wasserstoff und Sauerstoffgas unter Zuhilfenahme von Katalysatoren (z.B. Platin) erfolgt. Allgemein bezeichnet, handelt es sich bei den Katalysatoren um Stoffe, welche die Geschwindigkeit einer chemischen Reaktion erhöhen oder verringern können. Da sie sich dabei nicht verbrauchen, liegen Katalysatoren am Ende der Reaktion unverändert vor und treten somit auch nicht in den Reaktionsgleichungen der Umwandlung auf. Eine Umsetzung der Beschleunigung wird durch das Herabsetzen der Aktivierungsenergie realisiert. Somit kann die gehemmte Reaktion von Sauerstoff und Wasserstoff beschleunigt werden.

Die sich frei bewegenden Wasserstoffmoleküle kontaktieren die Oberfläche des Katalysatormaterials. Dort angelagerte, frei bewegliche Elektronen sorgen für eine Aufspaltung der Bindungen, verbinden sich mit den einzelnen Wasserstoffatomen und ermöglichen diesen eine freie Bewegung auf der Oberfläche. Die ebenfalls frei beweglichen Sauerstoffmoleküle landen auf der Platinoberfläche und gehen als einzelne Atome eine Bindung mit jeweils zwei Wasserstoffatomen ein. Als Ergebnis sind damit aus einem Sauerstoffmolekül und zwei Wasserstoffmolekülen zwei durch Rekombination hervorgerufene Wassermoleküle entstanden.

Bei der Vereinigung von Sauerstoff und Wasserstoff zurück zu Wasser wird Energie frei, die sich durch eine hohe Wärmeentwicklung darstellt (193 kJ/mol) und den Wassermolekülen das Verlassen des Platinkatalysators ermöglicht. Die getrennten Stoffe sind durch Rekombination mit Hilfe eines Katalysators wieder vereint worden.

Mit Hilfe dieses Effekts wurden unter anderem auch externe katalytische Stopfen zur Rekombination entwickelt. Beim Einsatz des Rekombinationssystems werden die während der Wasserzersetzung in der Batterie entstehenden Gase Wasserstoff und Sauerstoff in den Rekombinator, der auf der Blei-Säure-Batterie aufgebracht ist, geleitet.

Mittels eines integrierten Edelmetallkatalysators, der in einer gasdurchlässigen Keramik enthalten ist, werden diese Gase rekombiniert, wobei Wasserdampf entsteht. Der Wasserdampf kondensiert an den Wänden des Stopfens. Die sich bildenden Wassertropfen fließen nach unten und werden in die Batterie zurückgeführt.

Das Problem beim Abfließen des Wassers besteht darin, dass sich kondensierende Wassertropfen nach der Kondensation auch im oberen Bereich des Doms absetzen können. Dabei ist die Möglichkeit gegeben, dass sich diese Wassertropfen im oberen Bereich des Doms bilden. Wenn die Tropfen sich vom oberen Bereich des Doms lösen und die gasdurchlässige Keramik mit integriertem Edelmetallkondensator benetzen, dann werden die Poren der Keramik benetzt und "verstopfen", weshalb sie für den Gastransport nicht mehr zur Verfügung stehen. Die reduzierte Gasdurchlässigkeit durch die verstopften Poren trägt dazu bei, dass der Wirkungsgrad von diesen Stopfen deutlich reduziert wird.

Dieses Problem ist bereits bekannt und es sind verschiedene Lösungen im Stand der Technik vorgeschlagen worden.

So ist aus der Druckschrift EP 1 807 191 B1 ein Rekombinator mit einer Rekombinationseinrichtung zur katalytischen Rekombination von in Akkumulatoren entstehendem Wasserstoff und Sauerstoff zu Wasser als bekannt zu entnehmen. Dabei ist oberhalb der Rekombinationseinrichtung ein Abschirmelement vorgesehen, welches sich an einer Behälterwand von einem Behälter des Rekombinators bildendes Wasser abfangen soll, um dem zuvor genannten Problem zu begegnen. Es werden unterschiedliche Abschirmelemente dazu vorgeschlagen, die zwischen den Kondensationswänden und der gasdurchlässigen Keramik eingesetzt werden. Als Nachteile von diesen Lösungen könnte angesehen werden, dass ein zusätzliches Element angeschafft werden muss und damit verbundene zusätzliche Kosten auftreten. Zum anderen muss dann konstruktionsseitig die Verklemmung im Zylinder realisiert werden. Dies führt zu einem erhöhten Montageaufwand.

Zudem ist aus der Druckschrift EP 2 936 585 B1 eine Gasrekombinationskappe als bekannt zu entnehmen. Für das obengenannte Problem wird dabei eine Tropfkappe vorgeschlagen, welche sich im oberen Bereich eines Kondensationszylinders der Gasrekombinationskappe befindet, um dort Kondensationswasser aufzufangen. Als Nachteile könnten ebenfalls die zusätzlichen Kosten eines zusätzlichen Elementes und eine konstruktionsmäßige Anpassung des Gesamtkonzepts angesehen werden.

DE 20 2018 100 892 U1 offenbart einen Rekombinator zur katalytischen Rekombination von in Energiewandlern, insbesondere Akkumulatoren, entstehendem Wasserstoff und Sauerstoff zu Wasser. Eine Rekombinationseinrichtung ist innerhalb einer rohrförmigen Trenneinrichtung angeordnet. Zur Ausrichtung der Rekombinationseinrichtung ist eine stabförmige Zentrierhilfe vorgesehen.

WO 2017/ 191848 A1 offenbart einen Rekombinator, bei dem unterhalb einer Rekombinationseinrichtung ein Leitblech angeordnet ist, mittels dem entstehendes Kondensat in einen Akkumulator zurückgeführt werden kann.

Der Erfindung liegt nun die Aufgabe zugrunde, eine kostengünstige und praktikable Vorrichtung für ein Rekombinationssystem zu schaffen, welche einen sicheren Betrieb von Prozessmedien im System gewährleistet.

In bevorzugter Ausgestaltung der Erfindung ist vorgesehen, dass eine Prozessmediumleitvorrichtung für ein Rekombinationssystem mit einer Rekombinationseinrichtung zur katalytischen Rekombination von in Akkumulatoren entstehendem Wasserstoff und Sauerstoff zu Wasser bereitgestellt wird. Dabei ist die Prozessmediumleitvorrichtung ausgelegt, das Rekombinationssystem nach außen hin zu begrenzen und umfasst zumindest ein Leitelement, welches oberhalb der Rekombinationseinrichtung angeordnet ist, sodass ein Prozessmedium, insbesondere Wasser, von der Prozessmediumleitvorrichtung zu zumindest einem Teilbereich eines Innenbereichs des Rekombinationssystems geleitet wird. Die vorgestellte Vorrichtung ist besonders einfach zu realisieren und somit nicht besonders kostenintensiv in der Herstellung. Das Prozessmedium, insbesondere Wasser, wird zuverlässig so geleitet, dass ein unbeabsichtigtes Benetzen mit dem Medium von der Rekombinationseinrichtung, welche beispielsweise eine Keramik umfasst, verhindert wird, sodass ein Aufrechterhalten einer Rekombinationseffizienz gewährleistet wird.

Weitere bevorzugte Ausgestaltungen der Erfindung ergeben sich aus den übrigen, in den Unteransprüchen genannten Merkmalen.

In einer weiteren bevorzugten Ausgestaltung der Erfindung ist vorgesehen, dass die Prozessmediumleitvorrichtung einstückig mit dem zumindest einen Teilbereich des Innenbereichs des Rekombinationssystems ausgebildet ist oder als eine lösbare, mit dem zumindest einen Teilbereich des Innenbereichs des Rekombinationssystems verbindbare Bauteileinheit ausgebildet ist. In beiden Varianten ist ein verringerter Montageaufwand gegeben, sodass auf einfache Weise eine praktikable Vorrichtung für ein Rekombinationssystem bereitgestellt werden kann, welche einen sicheren Betrieb von Prozessmedien im System gewährleistet. Die Bauteileinheit und der Teilbereich des Innenbereichs des Rekombinationssystems können mittels einer Steckverbindung oder mittels eines Schraub-, Steck- oder Bajonettverschlusses verbindbar ausgestaltet sein. Auch eine Kombination von den unterschiedlichen Verbindungsarten ist vorstellbar.

Auch ist in einer weiteren bevorzugten Ausgestaltung der Erfindung vorgesehen, dass die Bauteileinheit im Wesentlichen die Form eines Verschließelements aufweist, wobei das Leitelement an einer Unterseite der Bauteileinheit vorgesehen ist und wobei die Bauteileinheit mechanisch auf das Rekombinationssystem aufsteckbar oder aufschraubbar oder mit Hilfe eines Bayonettverschlusses aufsteckbar ist, sodass zumindest ein Teilbereich des Leitelements mit dem zumindest einen Teilbereich eines Innenbereichs des Rekombinationssystem verbindbar ist.

Das Verschließelement kann beispielsweise die Form eines Stopfens aufweisen. Es sind jedoch auch andere Formen und Ausprägungen des Verschließelements vorstellbar. Das Stecksystem stellt dabei einen verringerten Montageaufwand bereit, sodass eine einfache und praktikable Vorrichtung gewährleistet ist.

Das Verschließelement kann ein Dichtungselement (angespritzte Dichtungslippe) aufweisen.

Ferner ist erfindungsgemäß vorgesehen, dass das Leitelement eine kreiskegelförmige, ellipsenkegelförmige oder pyramidenförmige (rechteckige Fläche) Ausformung aufweist, wobei die Ausformung an einem Randbereich mit einem größten Radius der Ausformung zumindest teilweise an dem zumindest einen Teilbereich des Innenbereichs des Rekombinationssystems angeordnet ist. Mittels solch eines kegelförmigen Überbaus über der Rekombinationseinrichtung wird zuverlässig und auf einfache Weise verhindert, dass ein Prozessmedium, insbesondere Wasser, auf darunterliegende Komponenten der Rekombinationseinrichtung, beispielsweise eine poröse Keramik, gelangt. Der kegelförmige Überbau kann als ein Abfluss des Mediums, beispielsweise Kondenswasser, angesehen werden, wobei eine seitliche Abführung des Mediums begünstigt wird und somit das Herabfallen etwa des Kondenswassers auf eine Komponente, beispielsweise eine Keramik, zuverlässig verhindert wird.

Denkbar ist auch ein Aufbau mit einem mäanderförmigen Aufbau der Zylinderinnenfläche. Im Sinne der Erfindung können durch die Schaffung einer kreiskegelförmigen Ausformung des oberen Bereiches des Rekombinationssystems, welcher auch als Dom beziehungsweise Kondensationsdom oder Kondensationszylinder bezeichnet werden kann, deutliche Vorteile in der Kostenstruktur geschaffen werden, da der Montageaufwand minimiert wird.

In einer besonderen Ausführung kann im oberen Bereich des Rekombinationssystems anstatt einer Teilausprägung des Doms ein Aufsatzstopfen verwendet werden, der diesen oben verschließt. Der Stopfen hat an der Unterseite einen entsprechend ausgeprägten kegelförmigen Ausschnitt, welcher den Abfluss des Kondenswassers begünstigt. Der Aufsatzstopfen stellt zwar ein zusätzliches Teil für den Rekombinator dar, ist aber von der Montage deutlich einfacher als bis dahin bekannte Lösungen. Der Aufsatzstopfen in Kegelform ist insofern zum besseren Abfluss des kondensierten Wassers geeignet, wobei das Wasser anschließend beispielsweise am inneren Rand des Doms, welcher ebenfalls zur Kondensation ausgelegt ist, abfließt. Das Verschließelement beziehungsweise der Stopfen kann auch als ein Kreiskegelstopfen für ein Rekombinationssystem bezeichnet werden.

Zudem ist erfindungsgemäß vorgesehen, dass eine Spitze der kreiskegelförmigen Ausformung im Wesentlichen mittig über und oberhalb der Rekombinationseinrichtung ausgerichtet ist. Die zuvor genannten Vorteile lassen sich somit noch besser erreichen.

Es ist in einer weiteren bevorzugten Ausgestaltung der Erfindung vorgesehen, dass der zumindest eine Teilbereich des Innenbereichs des Rekombinationssystems zumindest teilweise ein Innenbereich eines Kondensationszylinders ist. Somit kann das kondensierte Medium auf einfache Weise zu einem Randbereich geleitet werden, wo es letztendlich eine zuverlässige und effiziente Betriebsweise des Systems nicht stören kann.

Auch ist in einer weiteren bevorzugten Ausgestaltung der Erfindung vorgesehen, dass das Leitelement zumindest ein Haltelement umfasst, welches ausgelegt ist, die Rekombinationseinrichtung zu halten. Auf diese Weise sind keine zusätzlichen Elemente zur Fixierung mehr notwendig, sodass eine noch einfachere Montage gewährleistet ist.

Ferner ist in einer weiteren bevorzugten Ausgestaltung der Erfindung vorgesehen, dass eine Ausführung eines Kegelwinkels von 5° bis zu 45° beträgt. Die zuvor genannten Vorteile lassen sich somit noch besser erreichen. In allen vorgestellten Ausführungen kann der Winkel des Kegels so variiert werden, dass der Abfluss des Mediums, beispielsweise des Kondenswassers entsprechend optimiert wird.

Zudem ist in einer weiteren bevorzugten Ausgestaltung der Erfindung vorgesehen, dass das Leitelement zumindest ein Rippenelement aufweist. Die zuvor genannten Vorteile lassen sich somit noch besser erreichen. Mit anderen Worten kann das Innere des Kreiszylinders mit Rippungen beziehungsweise Rippenelementen so ausgeformt werden, dass sowohl die Kondensation selber als auch der Abfluss beispielsweise des Kondenswassers zusätzlich begünstigt ist. Diese Ausführung ist dabei sowohl beim zusätzlichen Stopfen als auch in der einstückigen Variante etwa in einer besonderen Domausführung möglich. Gemein ist beiden Ausführungen, dass der Kegel - ob ausgeprägt im Dom oder als zusätzlicher Stopfenaufsatz - sich immer über der Rekombinationseinrichtung beziehungsweise Komponenten dieser, beispielsweise einer gasdurchlässigen Keramik, befindet. Dadurch wird die Benetzung der gasdurchlässigen Keramik wirkungsvoll verhindert.

Auch ist in einer weiteren bevorzugten Ausgestaltung der Erfindung vorgesehen, dass die Prozessmediumleitvorrichtung zumindest einen Bereich aufweist, welcher ausgelegt ist, zumindest ein Rückzündungsschutzelement aufzunehmen. Auf diese Weise lassen sich weitere Montageschritte zusammenlegen, sodass eine noch einfachere Konstruktion der vorgestellten Vorrichtung gegeben ist.

Schlussendlich ist in einer weiteren bevorzugten Ausgestaltung der Erfindung vorgesehen, dass die Prozessmediumleitvorrichtung zumindest eine labyrinthartige Öffnung umfasst, welche ausgelegt ist, das zumindest eine Rückzündungsschutzelement funktional mit der Rekombinationseinrichtung zu verbinden. Mit anderen Worten kann die Vorrichtung in einer besonderen Ausführung im Sinne der Erfindung eine Stopfenöffnung umfassen, welche zum Druckausgleich einen mäanderförmigen Kanal aufweist, der den Gasausfluss verzögert und mehr Zeit für das Wasserstoff- /Sauerstoffgemisch lässt, um entsprechend in beispielsweise einem keramischen, porösen Rohr mit Edelmetallkondensator einzudringen. Darüber hinaus kann der Stopfen entsprechend am Ausgang besagten Bereich für einen Rückzündungsschutz aufweisen. Ein Rückzündngsschutz kann ebenfalls vorgesehen sein, um die Gefahr der Rückzündung in den Rekombinationsstopfen durch von außen entstehende Funken oder offenes Feuer zu verhindern, beziehungsweise zu minimieren.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine Schnittansicht eines Rekombinationssystems;
- Figur 2: eine Schnittansicht eines Rekombinationssystems mit einstückiger Prozessmediumleitvorrichtung;
- Figur 3: eine Schnittansicht eines Rekombinationssystems mit einer lösbar verbindbaren Prozessmediumleitvorrichtung.

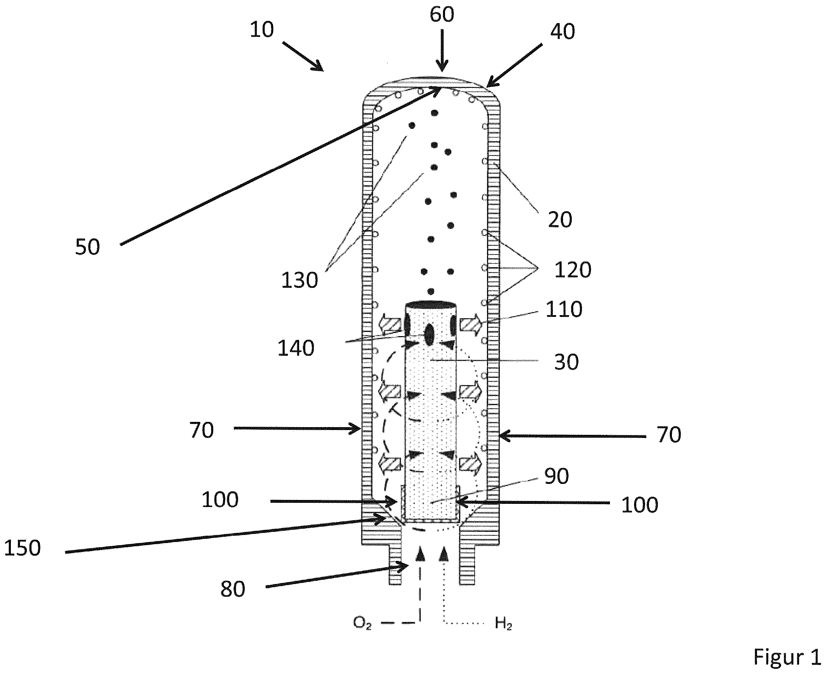

Figur 1 zeigt eine Schnittansicht eines Rekombinationssystems 10, wie es beispielsweise gemäß dem Stand der Technik sich darstellen könnte. Das Rekombinationssystem 10 umfasst dabei einen Dom 20 und eine Rekombinationseinrichtung 30. Der Dom 20 ist hier beispielhaft als eine im Wesentlichen rechteckige, hohle und zylinderförmige Geometrie dargestellt. Der Dom 20 weist dabei eine Außenwandung 40 und eine Innenwandung 50 auf. Bezogen auf die Bildebene weist der Dom 20 oben abgerundete Eckbereiche auf, sodass ein Deckenbereich 60 bogenförmig in seitliche Wandungen 70 übergeht. Wiederum bezogen auf die Bildebene weist der Dom unten einen Öffnungsbereich 80 auf, in welchen die Gase O₂ und H₂ strömen. Diese Gasströme werden mit jeweils verschiedenen gestrichelten Linien schematisch dargestellt, wobei Pfeile andeuten, dass diese Gase von unten in ein Inneres des Doms 20 strömen.

Oberhalb des Öffnungsbereichs 80 ist eine Halterung 90 zu erkennen. In der Halterung 90, welche auch als Fixierung bezeichnet werden kann, ist die Rekombinationseinrichtung 30 aufrecht gehalten. Zwei Backenelemente 100 von der Halterung 90 halten die Rekombinationseinrichtung 30 in einer aufrechten Position. Die Rekombinationseinrichtung 30 weist eine im Wesentlichen zylinderförmige Geometrie auf. Alle gezeigten Geometrien, Abmaße und Größenverhältnisse sind nur beispielhaft zu verstehen und sind lediglich als eine schematische Anordnung zu verstehen. Die Rekombinationseinrichtung 30 ist hier beispielhaft als eine gasdurchlässige Keramik mit integriertem Edelmetallkatalysator dargestellt und kann auch als Keramikröhrchen bezeichnet werden. Die jeweils unterschiedlichen gestrichelten Linien der beiden Gase sind kreisförmig im Inneren des Doms dargestellt und weisen mit der Pfeilspitze auf das Keramikröhrchen. Blockpfeile weisen von dem Keramikröhrchen weg und visualisieren den entstehenden Wasserdampf 110. Der Wasserdampf 110 kondensiert an der Innenwandung 50 zu kondensiertem Wasser 120. Insofern ist der Dom 20 zur Kondensation des Wasserdampfs 110 gedacht. Im oberen Bereich des Doms 20 kondensiert Wasserdampf 110 auch im Deckenbereich 60. Gemäß dem Schwerkraftprinzip ist es möglich, dass kondensiertes Wasser 110 in Form von Wassertropfen 130 in Richtung der Rekombinationseinrichtung 30 fällt. Auf der Rekombinationseinrichtung 30 können demnach Wasserflecken 140 entstehen.

Mit anderen Worten ist die Keramik benetzt mit Kondenswasser 120, sodass der Wirkungsgrad der Rekombinationseinrichtung 30 sich dadurch verringert. Statt über die Innenwandung 50 nach unten abzufließen und über den trichterförmigen Bodenbereich 150 des Rekombinationssystems 10 abzulaufen, ist es möglich, dass ein Teil des Kondenswassers 120 auf die Rekombinationseinrichtung 30 beziehungsweise Teile von der Rekombinationseinrichtung 30 tropft beziehungsweise gelangt und somit den Wirkungsgrad der Rekombinationseinrichtung 30 verringert.

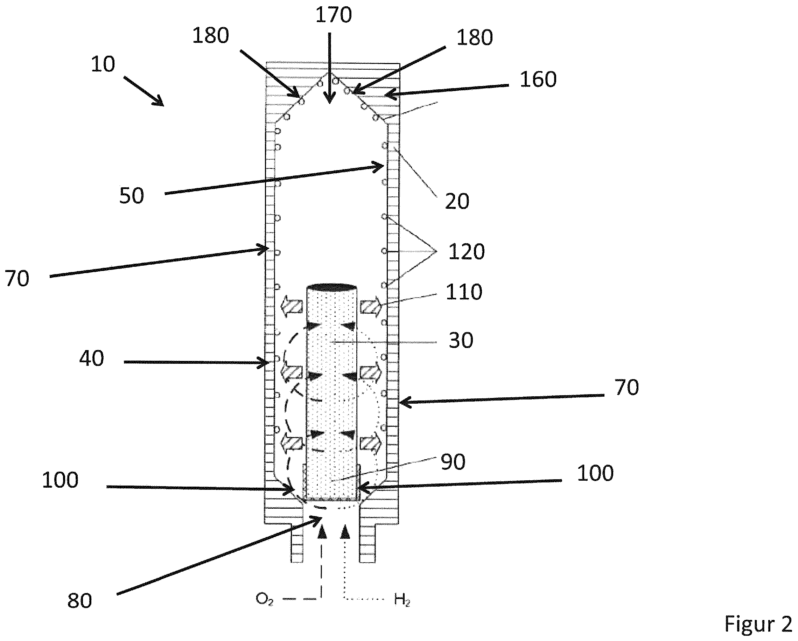

Figur 2 zeigt eine Schnittansicht eines Rekombinationssystems 10 mit einstückiger Prozessmediumleitvorrichtung 160. Das Rekombinationssystem 10 weist im unteren Bereich bezogen auf die Bildebene einen ähnlichen Aufbau wie das Rekombinationssystem 10 in der Figur 1 auf. Auch hier ist eine Rekombinationseinrichtung 30 zu erkennen, welche in einer Halterung 90 mit zwei Backenelementen 100 aufrecht gehalten wird. Im unteren Bereich ist zudem auch ein Öffnungsbereich 80 zu erkennen, durch welchen die beiden Gase O₂ und H₂ strömen (wiederum mit zwei verschiedenen gestrichelten Linien dargestellt). Die beiden Gase strömen um die Rekombinationseinrichtung 30, angedeutet durch die kreisförmigen gestrichelten Linien, wobei auch hier die Rekombinationseinrichtung 30 ein Keramikröhrchen beziehungsweise eine gasdurchlässige Keramik mit integriertem Edelmetallkatalysator umfasst.

Die Rekombinationseinrichtung 30 ist auch in der Figur 2 ausgelegt, die beiden Gase zusammenzuführen, sodass Wasserdampf 110 entsteht (wiederum dargestellt durch Blockpfeile). Das Rekombinationssystem 10 umfasst dabei auch in der Figur 2 einen Dom 20. Der Dom 20 ist auch hier beispielhaft als eine im Wesentlichen rechteckige, hohle und zylinderförmige Geometrie dargestellt. Der Dom 20 weist dabei eine Außenwandung 40 und eine Innenwandung 50 auf. Der Dom 20 weist auch hier seitliche Wandungen 70 auf. Alle gezeigten Geometrien, Abmaße und Größenverhältnisse sind auch hier nur beispielhaft zu verstehen und sind lediglich als eine schematische Anordnung zu verstehen. Wie bereits gesagt, weisen Blockpfeile von dem Keramikröhrchen weg und visualisieren den entstehenden Wasserdampf 110. Der Wasserdampf 110 kondensiert an der Innenwandung 50 zu kondensiertem Wasser 120. Insofern ist der Dom 20 zur Kondensation des Wasserdampfs 110 gedacht. Bezogen auf die Bildebene schließt die Prozessmediumleitvorrichtung 160 nahtlos und einstückig an die Seitenwandungen 70 des Doms 20 an. Die Prozessmediumleitvorrichtung 160 umfasst dabei ein Leitelement 170, welches zu einem Inneren des Doms 20 ausgerichtet ist. Das Leitelement 170 stellt eine kegelförmige Geometrie dar, welches so ausgerichtet ist, dass eine Spitze im Wesentlichen mittig über der Rekombinationseinrichtung 30 ausgerichtet ist. Zu erkennen ist kondensiertes Wasser an den Innenwandungen 180 von dem Leitelement 170. Die Innenwandungen 180 von dem Leitelement 170 gehen nahtlos in die Innenwandung 50 von den Seitenwandungen 70 des Doms 20 über.

Mit anderen Worten ist die Prozessmediumleitvorrichtung 160 einstückig mit dem Dom 20 ausgebildet, wobei das Leitelement 170 in der Form einer kegelförmigen Geometrie ausgelegt ist, den sich kondensierenden Wasserdampf 120 gemäß dem Schwerkraftprinzip zu den Innenwandungen 50 des Doms 20 zu leiten. Diese Innenwandungen 50 von dem Dom 20 können auch als ein Teilbereich eines Innenbereichs des Rekombinationssystems 10 bezeichnet werden. Das Wasser 120 beziehungsweise der Wasserdampf 110 können auch als Prozessmedium bezeichnet werden. Die Prozessmediumleitvorrichtung 160 stellt sich äußerlich als eine Verlängerung der Außenwandungen 40 des Doms 20 dar, wobei im oberen Bereich eine im Wesentlichen rechteckige Geometrie zu erkennen ist. Diese äußere Geometrie lässt sich beliebig auf einen jeweiligen Anwendungsfall anpassen.

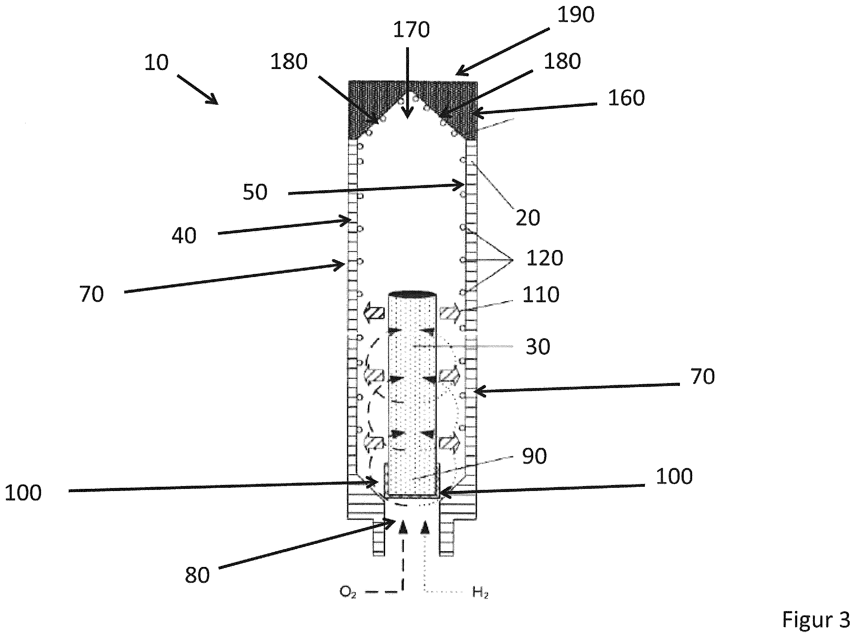

Figur 3 zeigt eine Schnittansicht eines Rekombinationssystems 10 mit einer lösbar verbindbaren Prozessmediumleitvorrichtung 160. Das Rekombinationssystem 10 weist im unteren Bereich bezogen auf die Bildebene einen ähnlichen Aufbau auf wie das Rekombinationssystem 10 in der Figur 1. Auch hier ist eine Rekombinationseinrichtung 30 zu erkennen, welche in einer Halterung 90 mit zwei Backenelementen 100 aufrecht gehalten wird.

Im unteren Bereich ist zudem auch ein Öffnungsbereich 80 zu erkennen, durch welchen die beiden Gase O₂ und H₂ strömen (wiederum mit zwei verschiedenen gestrichelten Linien dargestellt). Die beiden Gase strömen um die Rekombinationseinrichtung 30, angedeutet durch die kreisförmigen gestrichelten Linien, wobei auch hier die Rekombinationseinrichtung 30 ein Keramikröhrchen beziehungsweise eine gasdurchlässige Keramik mit integriertem Edelmetallkatalysator umfasst.

Die Rekombinationseinrichtung 30 ist auch in der Figur 3 ausgelegt, die beiden Gase zusammen zu führen, sodass Wasserdampf 110 entsteht (wiederum dargestellt durch Blockpfeile). Das Rekombinationssystem 10 umfasst dabei auch in der Figur 3 einen Dom 20. Der Dom 20 ist auch hier beispielhaft als eine im Wesentlichen rechteckige, hohle und zylinderförmige Geometrie dargestellt. Der Dom 20 weist dabei eine Außenwandung 40 und eine Innenwandung 50 auf. Der Dom 20 weist auch hier seitliche Wandungen 70 auf. Alle gezeigten Geometrien, Abmaße und Größenverhältnisse sind auch hier nur beispielhaft zu verstehen und sind lediglich als eine schematische Anordnung zu verstehen. Wie bereits gesagt, weisen Blockpfeile von dem Keramikröhrchen weg und visualisieren den entstehenden Wasserdampf 110. Der Wasserdampf 110 kondensiert an der Innenwandung 50 zu kondensiertem Wasser 120. Insofern ist der Dom 20 zur Kondensation des Wasserdampfs 110 gedacht. Die Prozessmediumleitvorrichtung 160 umfasst dabei eine separate Bauteileinheit 190, welche im aufgesetzten Zustand nahtlos in die Seitenwandungen 70 des Doms 20 übergeht. Die Prozessmediumleitvorrichtung 160 umfasst dabei ein Leitelement 170, welches in ein Inneres des Doms 20 ausgerichtet ist. Das Leitelement 170 stellt eine kegelförmige Geometrie dar, welche so ausgerichtet ist, dass eine Spitze im Wesentlichen mittig über der Rekombinationseinrichtung 30 ausgerichtet ist. Zu erkennen ist kondensiertes Wasser an den Innenwandungen 180 von dem Leitelement 170. Die Innenwandungen 180 von dem Leitelement 170 gehen nahtlos in die Innenwandung 50 von den Seitenwandungen 70 des Doms 20 über. Die Prozessmediumleitvorrichtung 160 kann in der lösbaren Variante auch als Aufsatzstopfen in Kegelform zum besseren Abfluss des kondensierten Wassers bezeichnet werden.

### Bezugszeichen

- 10: Rekombinationssystem
- 20: Dom
- 30: Rekombinationseinrichtung
- 40: Außenwandung
- 50: Innenwandung
- 60: Deckenbereich
- 70: Seitenwandung
- 80: Öffnungsbereich
- 90: Halterung
- 100: Backenelement
- 110: Wasserdampf
- 120: Wasser
- 130: Wassertropfen
- 140: Wasserflecken
- 150: Bodenbereich
- 160: Prozessmediumleitvorrichtung
- 170: Leitelement
- 180: Innenwandung
- 190: Bauteileinheit

## Patentansprüche

1. Prozessmediumleitvorrichtung (160) für ein Rekombinationssystem (10) mit einer Rekombinationseinrichtung (30) zur katalytischen Rekombination von in Akkumulatoren entstehendem Wasserstoff und Sauerstoff zu Wasser (110) **dadurch gekennzeichnet, dass** die Prozessmediumleitvorrichtung (160) ausgelegt ist das Rekombinationssystem (10) nach außen hin zu begrenzen und zumindest ein Leitelement (170) umfasst, welches oberhalb der Rekombinationseinrichtung (30) angeordnet ist, sodass das Wasser (110) als Prozessmedium, von der Prozessmediumleitvorrichtung (160) zu zumindest einem Teilbereich eines Innenbereichs des Rekombinationssystems (10) geleitet wird, und das Leitelement (170) eine kreiskegelförmige, ellipsenförmige oder pyramidenförmige Ausformung aufweist, wobei die Ausformung an einem Randbereich mit einem größten Radius der Ausformung zumindest teilweise an dem zumindest einen Teilbereich des Innenbereichs des Rekombinationssystems (10) angeordnet ist, und wobei eine Spitze der kreiskegelförmigen Ausformung im Wesentlichen mittig über und oberhalb der Rekombinationseinrichtung (30) ausgerichtet ist.

2. Prozessmediumleitvorrichtung (160) nach Anspruch 1, wobei die Prozessmediumleitvorrichtung (160) einstückig mit dem zumindest einen Teilbereich des Innenbereichs des Rekombinationssystems (10) ausgebildet ist oder als eine lösbare mit dem zumindest einen Teilbereich des Innenbereichs des Rekombinationssystems (10) verbindbare Bauteileinheit (190) ausgebildet ist.

3. Prozessmediumleitvorrichtung (160) nach Anspruch 2, wobei die Bauteileinheit (190) im Wesentlichen die Form eines Verschließelements aufweist, wobei das Leitelement (170) an einer Unterseite der Bauteileinheit (190) vorgesehen ist und wobei die Bauteileinheit (190) mechanisch auf das Rekombinationssystem (10) aufsteckbar oder verschraubbar ist, sodass zumindest ein Teilbereich des Leitelements (170) mit dem zumindest einen Teilbereich eines Innenbereichs des Rekombinationssystem (10) verbindbar ist.

4. Prozessmediumleitvorrichtung (160) nach einem der vorherigen Ansprüche, wobei der zumindest eine Teilbereich des Innenbereichs des Rekombinationssystems (10) zumindest teilweise ein Innenbereich eines Kondensationszylinders ist.

5. Prozessmediumleitvorrichtung (160) nach einem der vorherigen Ansprüche, wobei das Leitelement (170) zumindest ein Haltelement umfasst, welches ausgelegt ist, die Rekombinationseinrichtung (30) zu halten.

6. Prozessmediumleitvorrichtung (160) nach Anspruch 1 bis 5, wobei eine Ausführung eines Kegelwinkels von 5° bis zu 45° beträgt.

7. Prozessmediumleitvorrichtung (160) nach einem der vorherigen Ansprüche, wobei das Leitelement (170) zumindest ein Rippenelement aufweist.

8. Prozessmediumleitvorrichtung (160) nach einem der vorherigen Ansprüche, wobei die Prozessmediumleitvorrichtung (160) zumindest einen Bereich aufweist, welcher ausgelegt ist, zumindest ein Rückzündungsschutzelement aufzunehmen.

9. Prozessmediumleitvorrichtung (160) nach Anspruch 8, wobei die Prozessmediumleitvorrichtung (160) zumindest eine labyrinthartige Öffnung umfasst, welche ausgelegt ist, das zumindest eine Rückzündungsschutzelement funktional mit der Rekombinationseinrichtung (30) zu verbinden.

## Claims

1. A process medium guiding apparatus (160) for a recombination system (10) having a recombination device (30) for catalytically recombining hydrogen and oxygen created in accumulators to form water (110), **characterized in that** the process medium guiding apparatus (160) is designed to limit the recombination system (10) towards the outside and comprises at least one guiding element (170) which is arranged above the recombination device (30), so that the water (110), as the process medium, is guided by the process medium guiding apparatus (160) to at least one subregion of an inner region of the recombination system (10), and the guiding element (170) has a circular conical, elliptical or pyramidal formed part, wherein the formed part is arranged on an edge region having a largest radius of the formed part at least partially on the at least one subregion of the inner region of the recombination system (10), and wherein a tip of the circular conical formed part is aligned substantially centered over and above the recombination device (30).

2. The process medium guiding apparatus (160) according to Claim 1, wherein the process medium guiding apparatus (160) is configured as a single piece with the at least one subregion of the inner region of the recombination system (10), or is configured as a detachable component unit (190) which can be connected to the at least one subregion of the inner region of the recombination system (10).

3. The process medium guiding apparatus (160) according to Claim 2, wherein the component unit (190) substantially has the form of a locking element, wherein the guiding element (170) is provided on a bottom side of the component unit (190) and wherein the component unit (190) can be mechanically fitted or screwed onto the recombination system (10), so that at least one subregion of the guiding element (170) can be connected to the at least one subregion of an inner region of the recombination system (10).

4. The process medium guiding apparatus (160) according to any one of the preceding claims, wherein the at least one subregion of the inner region of the recombination system (10) is at least partially an inner region of a condensation cylinder.

5. The process medium guiding apparatus (160) according to any one of the preceding claims, wherein the guiding element (170) comprises at least one holding element which is designed to hold the recombination device (30).

6. The process medium guiding apparatus (160) according to Claims 1 to 5, wherein an embodiment of a conical angle is from 5° to 45°.

7. The process medium guiding apparatus (160) according to any one of the preceding claims, wherein the guiding element (170) has at least one rib element.

8. The process medium guiding apparatus (160) according to any one of the preceding claims, wherein the process medium guiding apparatus (160) has at least one region which is designed to receive at least one backfire safety element.

9. The process medium guiding apparatus (160) according to Claim 8, wherein the process medium guiding apparatus (160) comprises at least one labyrinth-like opening which is designed to functionally connect the at least one backfire safety element to the recombination device (30).

## Revendications

1. Dispositif de guidage de fluide de processus (160) pour un système de recombinaison (10) comportant une installation de recombinaison (30) pour la recombinaison catalytique en eau (110) d'hydrogène et d'oxygène se formant dans des accumulateurs, **caractérisé en ce que** le dispositif de guidage de fluide de processus (160) est conçu pour limiter le système de recombinaison (10) vers l'extérieur et comprend au moins un élément de guidage (170) qui est disposé au-dessus de l'installation de recombinaison (30) de telle sorte que l'eau (110), en tant que fluide de processus, est guidée du dispositif de guidage de fluide de processus (160) à au moins une partie d'une zone intérieure du système de recombinaison (10), et l'élément de guidage (170) présente une protubérance en forme de cône circulaire, en forme d'ellipse ou en forme de pyramide, la protubérance, sur une zone de bord avec un rayon plus grand de la protubérance, étant disposée au moins en partie sur l'au moins une partie de la zone intérieure du système de recombinaison (10) et une pointe de la protubérance en forme de cône circulaire étant orientée sensiblement de manière centrée sur l'installation de recombinaison (30) et au-dessus de celle-ci.

2. Dispositif de guidage de fluide de processus (160) selon la revendication 1, le dispositif de guidage de fluide de processus (160) étant réalisé d'un seul tenant avec l'au moins une partie de la zone intérieure du système de recombinaison (10) ou réalisé sous la forme d'une unité d'élément structural (190) pouvant être reliée de manière détachable à l'au moins une partie de la zone intérieure du système de recombinaison (10).

3. Dispositif de guidage de fluide de processus (160) selon la revendication 2, l'unité d'élément structural (190) présentant sensiblement la forme d'un élément de fermeture, l'élément de guidage (170) étant prévu sur une face inférieure de l'unité d'élément structural (190) et l'unité d'élément structural (190) pouvant être montée ou vissée mécaniquement sur le système de recombinaison (10), de telle sorte qu'au moins une partie de l'élément de guidage (170) peut être reliée à l'au moins une partie d'une zone intérieure du système de recombinaison (10).

4. Dispositif de guidage de fluide de processus (160) selon l'une quelconque des revendications précédentes, l'au moins une partie de la zone intérieure du système de recombinaison (10) étant au moins en partie une zone intérieure d'un cylindre de condensation.

5. Dispositif de guidage de fluide de processus (160) selon l'une quelconque des revendications précédentes, l'élément de guidage (170) comprenant au moins un élément de maintien qui est conçu pour maintenir l'installation de recombinaison (30).

6. Dispositif de guidage de fluide de processus (160) selon les revendications 1 à 5, une réalisation d'un angle de cône étant de 5° à 45°.

7. Dispositif de guidage de fluide de processus (160) selon l'une quelconque des revendications précédentes, l'élément de guidage (170) présentant au moins un élément de nervure.

8. Dispositif de guidage de fluide de processus (160) selon l'une quelconque des revendications précédentes, le dispositif de guidage de fluide de processus (160) présentant au moins une zone qui est conçue pour recevoir au moins un élément de protection contre les retours de flamme.

9. Dispositif de guidage de fluide de processus (160) selon la revendication 8, le dispositif de guidage de fluide de processus (160) comprenant au moins une ouverture en forme de labyrinthe qui est conçue pour relier de manière fonctionnelle l'au moins un élément de protection contre les retours de flamme à l'installation de recombinaison (30).
